# FASCICULE DE BREVET EUROPEEN

(11) **EP 3 449 188 B1**
(45) Date de publication et mention de la délivrance du brevet: **14.09.2022**
(21) Numéro de dépôt: 17725301.0
(22) Date de dépôt: 24.04.2017
(51) Int. Cl.: F24C 7/06, F24C 15/10, A47B 96/18, H05B 6/12

(54) **PLAQUE VITROCERAMIQUE POUR PLAN DE TRAVAIL OU MEUBLE**
GLASKERAMIKPLATTE FÜR ARBEITSPLATTE ODER MÖBELSTÜCK
GLASS CERAMIC PLATE FOR WORKTOP OR FURNITURE

(30) Priorité: 25.04.2016 FR 1653642
(43) Date de publication de la demande: 06.03.2019
(73) Titulaire: Eurokera S.N.C., 02400 Château-Thierry (FR)
(72) Inventeur: ROUX, Nicolas, 02400 Chateau-Thierry (FR); VILATO, Pablo, 75014 Paris (FR); DEMOL, Franck, 51100 Reims (FR); DEBREYER, Grégory, 77140 Montcourt Fromonville (FR); RAVEL, Michaël, 02850 Barzy Sur Marne (FR); CHARPENTIER, Bertrand, 02400 Chateau-Thierry (FR)
(74) Mandataire: Saint-Gobain Recherche
(86) Numéro de dépôt international: PCT/FR2017/050963
(87) Numéro de publication internationale: WO 2017/187070

(56) Documents cités:
- EP-A1- 1 869 368
- EP-A1- 2 865 949
- EP-A2- 1 106 931
- EP-A2- 2 108 893
- EP-A2- 2 602 556
- WO-A1-2004/019150
- WO-A2-98/41064
- DE-U1- 29 620 838
- DE-U1-202004 021 071
- US-B1- 6 498 326

## Description

La présente invention concerne une plaque (en) vitrocéramique, en particulier destinée à servir de plan de travail ou de surface (notamment horizontale) de meuble, cette plaque étant en particulier de grandes dimensions, l'invention concernant également le mobilier ainsi formé.

La vitrocéramique est notamment utilisée depuis plusieurs années pour former des plaques de cuisson en vitrocéramique, lesquelles rencontrent un grand succès auprès des ménagistes, fabricants d'électroménagers et utilisateurs de par leur aspect attractif et leur facilité de nettoyage.

Les plans de travail sont quant à eux généralement réalisés en d'autres matériaux, par exemple le bois, le quartz, le Corian^{®}, etc, cependant l'utilisation de plaques vitrocéramiques pour réaliser ces plans de travail, bien qu'induisant des problématiques spécifiques à ce matériau, s'avère particulièrement intéressante.

Une vitrocéramique est à l'origine un verre, dit verre précurseur (ou verremère ou green-glass), dont la composition chimique spécifique permet de provoquer par des traitements thermiques adaptés, dits de céramisation, une cristallisation contrôlée. Cette structure spécifique en partie cristallisée confère à la vitrocéramique des propriétés uniques.

Chaque produit en vitrocéramique est le résultat d'études spécifiques et de nombreux essais, étant donné qu'il est très délicat de faire des modifications sur des vitrocéramiques et/ou sur leur procédé d'obtention sans risquer un effet défavorable sur les propriétés recherchées : par exemple, dans son usage habituel comme plaque de cuisson, une plaque vitrocéramique doit généralement présenter une transmission dans le domaine du visible à la fois suffisamment basse pour masquer les éléments de chauffage sous-jacents au repos et suffisamment élevée pour que l'utilisateur puisse détecter visuellement lesdits éléments en état de marche dans un but de sécurité et/ou puisse lire des afficheurs éventuels. Les plaques vitrocéramiques doivent également présenter une résistance mécanique suffisante telle que requise pour leur utilisation, notamment et à plus forte raison quand elles sont de grande taille, en particulier, dans le domaine de l'électroménager, doivent présenter une bonne résistance (définie par exemple selon la norme EN 60335-2-6 dans leur usage habituel comme plaques de cuisson) à la pression, aux chocs (support et chute d'ustensiles, etc), etc.

Afin de remplir la ou les fonctions qui lui sont attribuées, la plaque en vitrocéramique est généralement munie d'accessoires ou éléments supplémentaires (décoratifs ou fonctionnels) requis pour son usage final (par exemple d'éléments de chauffage ou d'un bandeau de commande pour les plaques de cuisson), en particulier de composants électroniques, lesdits éléments ou accessoires étant généralement fixés sur la plaque de façon définitive, par encastrement dans un logement de la plaque prévu à cet effet, et/ou collage éventuel dans une zone distincte de celle des zones de chauffe éventuelles. La position et le choix des accessoires sont ainsi fixés à l'avance, et une fois la plaque et ses accessoires montés, si un élément est défectueux, le démontage de l'ensemble à l'aide d'outils spécifiques doit être opéré, voire la réparation implique de changer toute la plaque ou l'ensemble.

En outre, pour une plaque de grandes dimensions, le poids de la vitrocéramique est important et empêche une manipulation facile de ladite plaque en cas de problèmes ; par conséquent, l'utilisation de la vitrocéramique combinée à des composants électroniques pour réaliser des plans de travail ou des surfaces de meubles interactifs et/ou multi-usages pose des problèmes en terme de montage ou démontage des composants, notamment lorsqu'il s'agit de réaliser des installations à caractère modulable.

Les documents WO 2004/019150 A1, EP 1 869 368 A1, EP 2 108 893 A2, EP 1 106 931 A2, US 6 498 326 B1, EP 2 865 949 A1 divulguent des plaques vitrocéramiques de l'état de l'art, utilisant un aimant pour connecter un élément à rapporter.

EP 2 602 556 A2 divulgue une plaque vitrocéramique pourvue d'un profilé en acier.

DE 20 2004 021071 U1 divulgue une plaque vitrocéramique pourvue d'une couche en acier.

La présente invention a donc cherché à mettre au point une plaque permettant un montage et un démontage, en particulier d'équipement(s) électronique(s), plus simples, adaptés aux usages prévus pour cette plaque (dans un meuble et/ou comme plan de travail notamment), en particulier une plaque permettant de monter ou démonter à loisir, sans l'utilisation d'outils spécifiques et sans changer la plaque, différents types d'accessoires, le choix des accessoires pouvant en outre se faire à la commande, ou des accessoires pouvant être substitués à d'autres, selon son envie ou ses besoins, permettant ainsi d'obtenir le cas échéant une installation modulable.

Ce but a été atteint par les plaques vitrocéramiques, selon les revendications indépendantes 1 et 2. Chaque plaque vitrocéramique est destinée en particulier à être utilisée comme surface de meuble et/ou plan de travail, et comprenant, en au moins l'une de ses faces (en particulier et avantageusement sa face inférieure (en position d'utilisation)), au moins un élément de connexion de hauteur (ou épaisseur) inférieure ou égale à 10 cm (de préférence inférieure à 6 cm, avantageusement inférieure ou égale à 4 cm), ledit élément de connexion comprenant au moins une partie aimantée ou ((au moins une partie) en un matériau) susceptible d'être attiré(e) par un aimant.

L'élément de connexion est un élément intermédiaire de faible épaisseur (inférieure ou égale à 3 cm) pouvant se présenter sous une forme étendue (dans au moins une direction parallèle au plan de la plaque, par exemple sous forme d'un rail), ou encore sous forme d'un revêtement ou couche (ou éventuellement revêtement multi-couches). De préférence, cet élément de connexion est formé d'une coque cylindrique de faibles dimensions ou d'une couche (notamment de peinture) comme précisé ultérieurement. De préférence également, cet élément (et en particulier sa partie aimantée ou (en un matériau) susceptible d'être attiré(e) par un aimant) est formé d'un matériau résistant à au moins 70°C, et de préférence résistant à au moins 120°C.

Cet élément comprend au moins une partie (cette partie pouvant être une portion, le cas échéant non individualisée, de l'élément ou l'un des composants distincts de l'élément) aimantée ou en un matériau susceptible d'être attiré par un aimant. Cette partie peut être notamment formée ou sous forme d'au moins un aimant permanent ou fabriquée dans un matériau magnétique dur (c'est à dire possédant une aimantation rémanente ou naturelle présente en l'absence de champ magnétique extérieur), ou bien peut être formée d'une partie (ou d'un composant) métallique ou (ferro)magnétique, destinée à recevoir, de façon amovible, une partie aimantée d'un élément rapporté (c'est-à-dire d'un élément fabriqué séparément puis assemblé), comme précisé ultérieurement. Cette partie aimantée ou métallique ou magnétique de l'élément de connexion peut être notamment une extrémité dudit l'élément et/ou le cas échéant dans une enveloppe et/ou matrice dudit élément. Le cas échéant, la totalité de l'élément peut être aimantée, ou en un matériau susceptible d'être attiré par un aimant (en d'autres termes, l'élément de connexion ou chaque élément de connexion peut être formé au moins en partie, voire en totalité, d'au moins un matériau ou composant aimanté (ou d'un aimant) ou d'au moins un matériau ou composant susceptible d'être attiré par un aimant).

De préférence, la partie (ou le composant) aimanté(e) de l'élément de connexion présente un produit énergétique maximal BHmax d'au moins 10 KJ/m³ (mesuré selon la norme NF EN 62233). A titre d'exemples non limitatifs, cette partie aimantée de l'élément de connexion (ou l'aimant faisant partie dudit élément) peut être fabriqué(e) à partir de composés ou d'alliages utilisés pour faire des aimants puissants, non susceptibles de se démagnétiser sous l'action d'un champ faible (tel qu'existant en particulier dans les plaques de cuisson par induction ou avec des accessoires de type chargeur sans fil), présentant un produit énergétique maximal BHmax d'au moins 10 KJ/m³, tels que des aimants de néodyme ou de samarium ou alliages associés (samarium-cobalt, neodymefer-bore, etc). La partie aimantée peut être par exemple un aimant placé dans ou à une extrémité de l'élément de connexion, comme illustré ultérieurement.

Alternativement, la partie de l'élément de connexion (ou le composant) en un matériau susceptible d'être attiré par un aimant peut être fabriqué(e) à partir de différents composés métalliques ou alliages, à base notamment de fer, de nickel, de cobalt, manganèse, etc. Cette partie peut être intégrée dans l'élément de connexion ou rapportée sur ou dans l'enveloppe dudit élément, par exemple sous forme d'un feuillet (par exemple ferromagnétique) ou d'une couche déposée à la surface dudit élément. Le cas échéant, cette partie (ou la totalité de l'élément de connexion) peut être formée de particules magnétiques (notamment d'alliages à base d'oxydes de fer, et/ou de ferrite), dans une résine et/ou un liant, déposées par exemple sous forme d'au moins une couche de peinture, cette peinture étant par exemple une peinture renfermant des pigments magnétiques (en particulier à un taux d'au moins 10% en poids), ou étant par exemple une peinture magnétique commercialisé sous la référence Julien par la société AkzoNobel, etc. La peinture utilisée peut notamment avantageusement être une peinture comprenant de 10 à 50% de pigments magnétiques (par exemple des pigments commercialisés sous la référence Alnico FLNG12 de Epixen Industries), et comprenant par exemple de 40 à 80% de résine silicone, une ou des charges (par exemple jusqu'à 20%), et un ou des additifs tels que un ou des agents dispersants, un ou des additifs rhéologiques, un ou des débullants, etc. L'élément de connexion peut ainsi être sous forme d'une couche de peinture magnétique déposée sur la face inférieure de la plaque, la fixation d'un élément rapporté pouvant ainsi se faire avantageusement à n'importe quel endroit de ce revêtement, offrant ainsi une grande flexibilité, comme illustré ultérieurement.

De préférence, la partie aimantée ou susceptible d'être attirée par un aimant de l'élément de connexion, occupe une surface représentant de 15 à 100% de la surface, mise à plat, de l'élément de connexion sur son côté opposé à celui au contact de la plaque vitrocéramique, voire de 30 à 100% de ladite surface. Par exemple, elle occupe de 15 à 100% (voire de 30 à 100%) de la surface inférieure (en position d'utilisation) de l'élément de connexion, formée le cas échéant essentiellement par la surface intérieure de la cavité de l'élément quand celui-ci est creux. La partie aimantée (le cas échéant sous forme d'un aimant ou constituant aimanté rapporté, inséré ou collé dans l'enveloppe de l'élément pour former ledit élément) peut se trouver en surface ou le cas échéant masquée par une paroi de l'élément qui n'empêche pas son action, la partie susceptible d'être attirée par un aimant se trouvant pour sa part essentiellement en surface. Le cas échéant, l'élément de connexion peut être entièrement aimanté ou apte à attirer un aimant.

La plaque vitrocéramique mise au point comprend au moins un, et le cas échéant plusieurs, élément(s) de connexion sur au moins une de ses faces (de préférence essentiellement voire uniquement sur la face inférieure (ou face non apparente, en position d'utilisation) de la plaque). Chaque élément de connexion (apte à assurer la connexion avec un élément rapporté (c'est-à-dire avec un élément fabriqué séparément puis assemblé), en particulier complémentaire, comme explicité ultérieurement) peut être en une ou plusieurs parties (ces parties étant alors liées et/ou assemblées pour former ledit élément), et peut comprendre le cas échéant une coque ou enveloppe extérieure sous forme d'un profilé ou rail à section par exemple en U, T ou L, etc., avec éventuellement une ou des parties évidées, et/ou peut être muni le cas échéant d'un ou ou plusieurs autres constituants extérieurs ou intérieurs (par exemple d'un aimant intérieur), comme explicité et illustré ultérieurement.

Dans un premier mode de réalisation, la plaque ne comprend qu'un élément de connexion, en particulier sous forme d'une couche aimantée ou métallique ou magnétique, le cas échéant formée de particules métalliques et/ou magnétiques dans un liant, en particulier sous forme d'une couche de peinture, déposée, directement ou non, sur la face concernée de la plaque, ou sous forme d'un feuillet (par exemple ferromagnétique), d'épaisseur par exemple comprise entre 10 et 2000 µm, rapporté (par exemple par collage) sur la face concernée de la plaque.

Dans un autre mode de réalisation, la plaque comprend plusieurs éléments de connexion sous forme de profilés ou de rails tels que précédemment définis, notamment positionnés (de façon plus ou moins uniforme selon les besoins) sous le dessous de la plaque, en particulier répartis sur l'ensemble de la face inférieure de la plaque. Ces éléments sont par exemple assemblés à la plaque à l'aide d'une colle, telle qu'une colle de type silicone, époxy ou cyanoacrylate, en particulier d'une colle thermodurcissable présentant en outre avantageusement un coefficient de dilatation (mesurée selon la norme ISO11359-2) inférieur à 900.10⁻⁷ K⁻¹ entre -40 et 80°C, et une résistance au cisaillement d'au moins 1N/mm² (mesurée selon la norme IS04587, sur aluminium), et de préférence d'au moins 10 N/mm². Cette colle thermodurcissable permet de fixer de façon durable les connecteurs, en offrant un collage rigide offrant une meilleure résistance à diverses sollicitations. Le recours à ces colles particulières pour solidariser des éléments de connexion permettant eux-mêmes de rapporter l'équipement ou les accessoires voulus est particulièrement approprié et efficace, même dans des zones de chauffe éventuelles, tout en étant simple à mettre en œuvre et économique.

Lorsque la plaque est destinée à être équipée d'éléments chauffants, en particulier d'inducteurs, au moins une partie du ou des éléments (par exemple la coque ou enveloppe ou surface extérieure dans le cas d'un profilé ou d'un rail) est de préférence formée de matériau(x) réfractaire(s) et/ou amagnétique(s), résistant à au moins 70°C, et de préférence à au moins 120°C, par exemple en aluminium ou en graphite ou en carbure de silicium, ou en vermiculite ou fibres réfractaires, etc.

Comme évoqué précédemment, le ou les éléments de connexion sont aptes à assurer la connexion avec un élément rapporté, en particulier complémentaire, qu'il s'agisse directement d'un équipement ou accessoire à monter ou d'un contenant permettant de recevoir différents types d'équipements ou d'accessoires. Les dimensions, en particulier la faible épaisseur, des éléments de connexion selon l'invention permettent à la fois de positionner les éléments rapportés à proximité de la plaque afin qu'ils puissent exercer leur action en limitant les risques d'endommagement (rayures de la plaque liées aux manipulations possibles de ces éléments ou exposition éventuelle à la chaleur des composants électroniques, etc), et permettent de mettre, selon le type d'éléments de connexion utilisés, ces éléments à différents endroits de la plaque sans poser des problèmes d'encombrement afin d'offrir une structure modulable. De préférence, le ou les éléments de connexion présentent une hauteur (ou épaisseur) inférieure à 6 cm, avantageusement inférieure ou égale à 4 cm, et d'au moins 5 mm.

Au moins une partie (voire la totalité) des éléments de connexion sont ainsi aptes à recevoir, avantageusement de façon amovible, au moins une partie d'un élément (de) support (tel qu'un caisson ou plateau) devant recevoir un ou des accessoires à associer, ou, le cas échéant, sont aptes à recevoir au moins une partie d'un accessoire à associer directement.

En particulier, le ou les éléments à rapporter (formés séparément et assemblés à la plaque par l'intermédiaire des connecteurs) sont également pourvus chacun d'au moins une partie aimantée ou (en une matière) susceptible d'être attirée par un aimant, cette partie étant apte à être attirée par la partie aimantée ou susceptible d'être attirée par un aimant de l'élément de connexion (et étant dite 'complémentaire' de ladite partie de l'élément de connexion). Le ou les éléments de connexion ainsi pourvus sont apte(s) à recevoir chacun, avantageusement de façon amovible, au moins la partie complémentaire d'un élément à rapporter (ou à coupler). L'élément à rapporter est de préférence un élément support (tel qu'un caisson ou plateau) devant recevoir un ou des accessoires à associer, permettant ainsi d'ajouter selon les besoins différents types d'accessoires, en particulier usuels ou ne présentant pas de structure particulière pour l'assemblage. Alternativement, l'élément à rapporter peut également être directement un accessoire, présentant ou conçu pour présenter dans ce cas une partie complémentaire de la partie aimantée ou susceptible d'être attirée par un aimant de l'élément de fixation.

Les accessoires à associer peuvent être par exemple un ou des éléments de chauffage (par exemple des bobines à induction), un ou des systèmes d'affichage, une ou des cartes électroniques, une ou des sources lumineuses, un ou des boitiers ou interfaces de commande, un ou des capteurs, un ou des chargeurs sans fil, etc. Le ou les éléments supports utilisés le cas échéant pour associer ces accessoires à la plaque peuvent se présenter sous forme de plateau(x) ou boitier(s) ou caisson(s), en aluminium ou en plastique, ces plateaux ou boitiers pouvant être entièrement dissociés de la plaque et de ses connecteurs, ou pouvant être détachés d'un ou plusieurs connecteurs, tout en restant reliés en une autre partie à d'autre(s) connecteur(s), ce(s) élément(s) support(s) pouvant aussi le cas échéant faire partie de la plaque et/ou de connecteur(s).

Le cas échéant, les éléments de connexion peuvent être associés par paires ou par groupes, certains de ses éléments (ou premiers éléments) devant recevoir chacun au moins une première partie (aimantée ou susceptible d'être attirée par un aimant) du ou des éléments (supports et/ou accessoires) rapportés, et d'autres éléments (second éléments) devant recevoir chacun au moins une seconde partie - le cas échéant aussi aimantée ou susceptible d'être attirée par un aimant- du ou des éléments rapportés, les éléments de connexion associés par groupes comprenant le cas échéant sur le même principe des troisièmes éléments, voire des quatrièmes, etc, selon le mode d'assemblage des éléments à rapporter envisagé.

Outre la force s'exerçant entre la partie de l'élément de connexion et la partie complémentaire de l'élément à rapporter (l'aimant utilisé ou la partie aimantée présente selon les cas sur l'élément de connexion ou sur la partie complémentaire de l'élément à rapporter présentant de préférence un produit énergétique maximal BHmax d'au moins 10 KJ/m³, comme indiqué précédemment dans la description des aimants pouvant être utilisés), un moyen de blocage (pouvant être le cas échéant retiré en cas de besoin) peut être prévu (et faire également partie de l'élément de connexion) afin de maintenir de façon plus sure l'élément rapporté une fois positionné sur (une partie de la surface de) l'élément de connexion. Le moyen de blocage peut notamment exercer une force, en particulier en direction de (orientée vers) la plaque vitrocéramique, cette force étant de préférence perpendiculaire à, la direction de ladite force exercée entre l'élément de connexion et l'élément à rapporter concernés.

Le moyen de blocage peut par exemple être formé par la combinaison d'un élément de pression tel qu'un ressort, à l'extérieur ou l'intérieur d'une coque cylindrique formant (en partie) l'élément de connexion, cette coque renfermant par exemple un aimant, avec un élément de butée tel qu'une goupille, maintenant le ressort en compression une fois l'élément rapporté positionné sur la partie aimantée de l'élément de connexion, le retrait de la goupille pouvant ensuite permettre l'extraction de l'élément rapporté en cas de besoin.

La plaque vitrocéramique sur laquelle le ou les éléments de connexion sont fixés est avantageusement monolithique (ou monobloc ou d'un seul tenant), en particulier essentiellement plane, et présente une épaisseur inférieure à 15 mm, en particulier inférieure à 12 mm, notamment inférieure ou égale à 6 mm, et un coefficient de dilatation inférieur à 30.10⁻⁷ K⁻¹ entre 20 et 400°C (et de préférence inférieur à 13.10⁻⁷ K⁻¹ entre 20 et 400°C).

La présente invention concerne également un équipement mobilier et/ou ménager intégrant la plaque selon l'invention, et notamment une table (ou plan) de travail ou un meuble, ledit équipement étant formé d'au moins ladite plaque (notamment une plaque de grandes dimensions, en particulier de surface supérieure ou égale à 0.7 m², comme précisé ultérieurement), positionnée (en particulier horizontalement) sur un ou des éléments supports (caisson d'un meuble, pied(s) support(s), etc.), afin d'offrir une surface stable. En particulier, la présente invention concerne une table ou un meuble comprenant une surface ou plateau, en particulier de grandes dimensions, formé(e) par la plaque selon l'invention et apte à permettre en simultané ou successivement différentes activités et/ou support d'objets. Ce meuble peut être par exemple un ilot central de pièce, par exemple un ilot de cuisine, ou tout plan ou table de travail pour différents usages, par exemple une paillasse de laboratoire, une table ou une table basse, ou encore un meuble de type console, crédence, un mobilier de rangement, un comptoir, etc.

En particulier, l'invention concerne un équipement mobilier et/ou ménager dans lequel la plaque occupe la majorité (plus de 50% de la surface de la face où elle se trouve, de préférence plus de 80%, en particulier plus de 90%), et de préférence la totalité (formant ainsi une surface continue) d'une face dudit équipement mobilier et/ou ménager, en particulier la face supérieure (en position d'utilisation), notamment horizontale, dudit équipement mobilier et/ou ménager, afin d'offrir une surface stable continue apte à permettre en simultané ou successivement des activités (telles que travail, jeux, lecture, etc.), le support d'objets (tels que papiers, ordinateurs, vases, vaisselle, etc.), éventuellement la préparation ou la cuisson ou le réchauffage d'aliments dans des récipients appropriés, et/ou tout autre usage lié à la destination du meuble. La plaque utilisée est en particulier et avantageusement monolithique et présente une épaisseur inférieure à 15 mm, un coefficient de dilatation inférieur à 30.10⁻⁷ K⁻¹ entre 20 et 400°C, et une surface supérieure ou égale à 0.7 m², pour une utilisation comme plan de travail ou grande surface de meuble, comme détaillé ultérieurement.

La présence des connecteurs et des accessoires avantageusement en face inférieure permet le cas échant de cacher les éléments inesthétiques, d'offrir une surface apparente d'entretien facilité et de garantir une meilleure pérennité des accessoires de la plaque, etc. La plaque vitrocéramique offre ainsi une surface majoritairement continue/uniforme/sans raccords, esthétique et d'entretien facile. Elle peut être munie de revêtements de décoration ou fonctionnels de faible épaisseur (notamment de l'ordre de quelques dizaines de nanomètres à quelques centaines de microns, voire plus), par exemple en émail, peinture, couches minces, etc, et/ou d'autres éléments, rapportés ou non aux connecteurs précités.

Le cas échéant, la plaque peut présenter une surface (correspondant au produit de sa longueur par sa largeur) pour sa face de plus grandes dimensions destinée à être apparente et à servir de support d'articles (ménagers ou de travail), de dimensions supérieures à 0.4 m², notamment supérieures à 0.7 m², voire supérieures à 1 m², en particulier supérieures ou égales à 2 m², pour une utilisation en tant que plan de travail ou surface de meuble. La plaque présente également préférentiellement dans ce cas l'une et/ou l'autre des caractéristiques suivantes (les bornes données étant incluses): module d'Young compris entre 80 et 100 GPa (mesuré selon la norme ASTM C 1259), résistance à la flexion comprise entre 110 et 220 MPa (mesurée par test anneau sur tripode, sur une plaque de 70 mm X 70 mm X 4 mm, l'échantillon reposant sur 3 billes de 9.5 mm de diamètre positionnées au sommet d'un triangle équilatéral inscrit dans un cercle de 40 mm de diamètre, une force étant appliquée au centre de l'échantillon par un anneau de 10 mm de diamètre avec une avancée de 5 mm/min, les résultats étant interprétés avec le modèle de Weibull décrit dans : « A statistical distribution of strength of Materials », Royal Swedish Institute For Engineering Research, W. Weibull, Stockholm 1939, 1-45, la donnée obtenue, aussi appelée « facteur d'échelle », révélatrice de la contrainte moyenne à rupture et résultant du dépouillement par la méthode Weibull des mesures de module de rupture en flexion (MOR), étant exprimée en MPa), conductivité thermique inférieure à 2 W/m.K (mesurée selon la norme DIN 51936), résistance aux chocs thermiques comprise entre 250 et 700°C, densité comprise entre 2.3 et 2.7, résistance aux acides comprise entre 0 et 2 mg/cm² (mesurée selon la norme DIN12116), et résistance aux bases comprise entre 0 et 1 mg/cm² (mesurée selon la norme ISO 695).

La plaque vitrocéramique utilisée est préférentiellement plane (ou majoritairement ou quasiment plane), et présente en particulier une planéité (hauteur entre le point le plus haut et le point le plus bas du substrat par rapport au plan moyen du substrat, à l'exception des déformations volontaires éventuelles opérées sur le substrat à des fins esthétiques ou fonctionnelles) inférieure à 0,1% de la diagonale du substrat, et de préférence inférieure à 3 mm, notamment inférieure à 2 mm, en particulier inférieure à 1 mm, voire de l'ordre de zéro, en fonction de la taille/surface/diagonale du substrat, la planéité étant mesurée à l'aide d'un ondulomètre de référence SurFlat commercialisé par la société Visuol. Elle est généralement de forme géométrique, en particulier rectangulaire, voire carrée, voire circulaire ou ovale, etc., et présente généralement une face "supérieure" (face visible) en position d'utilisation, une autre face "inférieure" (généralement cachée, dans un châssis ou caisson) en position d'utilisation, et une tranche (ou chant ou épaisseur). La face supérieure est généralement plane et lisse mais peut aussi présenter au moins une zone en relief et/ou au moins une zone en creux et/ou au moins une ouverture et/ou des bords biseautés, etc, ces variations de forme constituant avantageusement des variations continues de la plaque (sans changement de matériaux ou raccords). La face inférieure est de préférence lisse, voire munie de picots (les connecteurs pouvant dans ce cas être collés par une colle servant alors également de matériau de remplissage le cas échéant, ou la peinture magnétique utilisée le cas échéant comme connecteur pouvant faire office de matériau de remplissage, ou la plaque comprenant un autre matériau de remplissage approprié, tel qu'une résine ou un film autonivelant).

L'épaisseur de la plaque vitrocéramique est généralement d'au moins 2 mm, notamment d'au moins 2.5 mm, en particulier est de l'ordre de 3 à 15 mm.

La vitrocéramique peut être de couleur sombre (noire, brun foncé) ou claire (blanc, crème), et peut être translucide ou opaque ou transparente selon l'usage et l'esthétique désirés. Il s'agit en particulier d'une vitrocéramique d'aluminosilicate de lithium. Elle peut être notamment affinée à l'arsenic (c'est-à-dire de (verre mère de) composition comprenant de l'ordre de 0.5 % à 1.5% en poids d'oxyde d'arsenic (exprimé en AS₂O₃), ou peut être non affinée à l'arsenic (en particulier présentant un taux d'oxydes d'arsenic inférieur à 0.2 %, en particulier inférieur à 0.1%, voire nul) ou affinée à l'étain ou affinée au(x) sulfure(s), et peut être obtenue par laminage ou par flottage.

Comme indiqué précédemment, la plaque peut comporter le cas échéant divers revêtements fonctionnels et/ou décoratifs, notamment parmi ceux généralement utilisés avec les vitrocéramiques, par exemple à base d'émail, de peinture, de couche(s) mince(s) (par exemple métallique(s), diélectrique(s), etc.), etc. Par exemple, l'une des faces peut comporter une ou des couches ou un ou des motifs en émail, à but décoratif et/ou afin de signaler un ou des éléments (afficheurs, etc.), et/ou servant de masquage (pour éviter par exemple la vision directe de sources lumineuses), et/ou pour d'autres fonctions (comme extracteur de lumière ou pour homogénéiser un éclairage, etc.). La plaque peut également être munie d'une couche fonctionnelle lui conférant une ou des propriétés supplémentaires telles qu'anti-rayures, renforcement mécanique, anti-traces, antidébordement, etc. le ou les revêtements pouvant se trouver notamment sur la face apparente ou sur la face opposée, selon le type de revêtement et la fonction recherchée.

La plaque (ou le meuble intégrant ladite plaque) peut être équipé(e), en particulier et avantageusement par l'intermédiaire des connecteurs, de différents éléments (ou accessoires) permettant divers usages afin de former notamment un meuble ou plan de travail interactif modulable.

Par exemple, elle peut être équipée d'une ou plusieurs sources lumineuses, notamment formées par des diodes électroluminescentes, et destinées par exemple à matérialiser (rendre visible) une ou des zones ou un ou des éléments ou affichages de la plaque, notamment par transmission lumineuse au travers de la plaque. Ces sources peuvent notamment permettre l'affichage de commandes (sous forme de touches, logos, voire claviers, etc.), activables par exemple par contact sur la surface de la plaque (à l'aide par exemple de capteurs situés sous la surface et pouvant également être rapportés par l'intermédiaire des connecteurs) ou à distance (notamment par communication sans fil), voire par simple mouvement de la main (par capteurs situés le cas échéant à l'extérieur et enregistrant le mouvement, par exemple par triangulation, pour le convertir, à l'aide notamment d'un algorithme et d'une interface adaptés, en l'activation d'une fonction par exemple), ou le cas échéant par la pose d'un objet déterminé à un emplacement déterminé de la plaque. La ou les sources lumineuses peuvent également permettre l'affichage de décors, ou de données diverses (affichage par exemple de pages d'ordinateurs, de recettes de cuisine, etc.) téléchargées par exemple par communication sans fil en utilisant une interface appropriée et projetées ou transmises à partir des sources lumineuses à la surface de la plaque.

La plaque (ou le meuble intégrant ladite plaque) peut également être équipé(e) d'un ou plusieurs éléments de chauffage, tels que des bobines à induction, des éléments radiants, activables également de différentes façons comme décrit pour les sources lumineuses, et peut également être équipée d'interface(s) de communication avec au moins un élément adjacent (par exemple les sources lumineuses ou éléments chauffants), et/ou le cas échéant avec au moins un élément extérieur, par exemple avec un module extérieur pour une communication sans fil, la ou lesdites interfaces étant par exemple un boitier de commande, une tablette ou un écran tactile, un système de type Bluetooth, WLAN, wifi, puce RFID, Lifi, etc.

La plaque (ou le meuble) peut également être équipé(e) d'autres éléments, tels qu'un ou des guides d'onde, ainsi que de différents autres composants, en particulier électriques et/ou électroniques, tels qu'un chargeur (par exemple de téléphone, bobine d'induction, etc), un ou des câbles, un composant sonore ou vibrant (signalant par exemple l'approche d'un objet de type casserole), etc.

La solution apportée par la présente invention est particulièrement avantageuse, comme évoqué précédemment. Les dimensions du ou des éléments de connexion et la possibilité de les positionner ou de positionner les éléments à associer en divers endroits, combinés au choix des matériaux utilisés, et à la possibilité de les associer avec des éléments amovibles, pour rapporter le ou les accessoires à coupler à une distance leur permettant d'exercer leur action éventuelle sans risques de dégradations par frottement ou par la chaleur desdits accessoires, permettent d'offrir une solution au problème posé convenant à tous types de plaques vitrocéramiques et permettent d'envisager le montage et/ou démontage de différents types d'accessoires, sans nécessiter d'installations ou d'outillages complexes, ni de manipulation de plaques, en particulier de poids et de dimensions importantes. Le produit mis au point selon l'invention répond ainsi au but recherché, en proposant un mode d'assemblage permettant de connecter différents types d'éléments en différents endroits de la plaque, de façon le cas échéant amovible, sans que l'installation pose des problèmes d'encombrements ni d'interférences avec certains accessoires combinés à la plaque (tels que les éléments de chauffage éventuels qu'ils soient radiants ou à induction), et tout en permettant aux accessoires associés d'exercer leur fonction en combinaison avec la plaque (tel que l'éclairage de zones de chauffe ou l'affichage de données par des éléments rapportés sous la plaque, etc), la solution proposée permettant également de changer le cas échéant les accessoires selon les besoins ou la destination de la plaque.

La plaque selon l'invention est fabriquée notamment à partir de plaques vitrocéramiques, en particulier de grandes dimensions, obtenues par céramisation, en effectuant notamment le collage du ou des éléments de connexion à la surface des vitrocéramiques à l'aide d'une colle thermodurcissable et/ou en appliquant une couche de peinture magnétique sur la face, en particulier la face inférieure, de la plaque.

Pour mémoire, la fabrication des plaques vitrocéramiques s'opère généralement comme suit : dans un four de fusion, on fond le verre de composition choisie pour former la vitrocéramique, puis on lamine le verre fondu en un ruban ou feuille standard en faisant passer le verre fondu entre des rouleaux de laminage et on découpe le ruban de verre aux dimensions souhaitées. Les plaques, déjà découpées ou non, sont ensuite céramisées de manière connue en soi, la céramisation consistant à cuire les plaques suivant le profil thermique choisi pour transformer le verre en le matériau polycristallin appelé « vitrocéramique » dont le coefficient de dilatation est nul ou quasi-nul et qui résiste à un choc thermique pouvant aller jusqu'à 750°C (voire au delà). La céramisation comprend généralement une étape d'élévation progressive de la température jusqu'au domaine de nucléation, généralement situé au voisinage du domaine de transformation du verre, une étape de traversée en plusieurs minutes de l'intervalle de nucléation, une nouvelle élévation progressive de la température jusqu'à la température du palier de céramisation, le maintien de la température du palier de céramisation pendant plusieurs minutes puis un refroidissement rapide jusqu'à la température ambiante.

Afin d'obtenir des plaques de grandes dimensions selon l'invention, en particulier des plaques de surface supérieure à 0.7 m2, on réduit préférentiellement, pendant le cycle de céramisation, la vitesse de passage d'au moins 25%, de préférence d'au moins 50%, ou on augmente la longueur de l'arche de céramisation ou le temps de séjour dans ladite arche d'au moins 25%, de préférence d'au moins 50%, par rapport respectivement à la vitesse, la longueur ou le temps de séjour optimaux ou usuels pour obtenir un substrat en vitrocéramique de surface inférieure à 0.4 m².

Le cas échéant, le procédé comprend également une opération de découpe (généralement avant céramisation), par exemple par jet d'eau, traçage mécanique à la molette, etc. suivie par une opération de façonnage (meulage, biseautage,...). Le procédé peut également comprendre une étape de laminage ou effondrement pour former des reliefs particuliers.

D'autres détails et caractéristiques avantageuses de l'invention ressortiront ci-après de la description de modes de réalisation non limitatifs de l'invention en référence aux dessins annexés dans lesquels :
- La figure 1a représente une coupe schématique d'un exemple de réalisation d'une plaque non couvert par les revendications (avec un élément sous forme de plot renfermant un aimant ou une partie susceptible d'être attirée par un aimant); - La figure 1b représente une variante de l'exemple selon la figure 1a;
- La figure 1c représente une autre variante de l'exemple selon la figure 1a;
- La figure 2a représente une vue en perspective (vue de dessus) d'une plaque selon l'invention suivant un premier mode de réalisation de l'invention;
- La figure 2b représente une coupe schématique partielle de ladite plaque représentée en figure 2a lorsqu'un élément support devant recevoir un ou des équipements ou accessoires à associer est rapporté et fixé à la plaque par l'intermédiaire de l'élément de connexion (formé dans ce mode par une couche de peinture magnétique);
- La figure 3a représente une vue en perspective (vue de dessus) d'une plaque selon l'invention suivant un deuxième mode de réalisation de l'invention;
- La figure 3b représente une coupe schématique partielle de ladite plaque représentée en figure 3a lorsqu'un élément support devant recevoir un ou des équipements ou accessoires à associer est rapporté et fixé à la plaque par l'intermédiaire d'un élément de connexion (formé dans ce mode par un rail muni d'un composant aimanté).

Les mêmes références sont utilisées dans l'ensemble des figures pour désigner le cas échéant les mêmes types d'éléments.

Dans chacune des figures précitées, la plaque (1) selon l'invention est une plaque monolithique en vitrocéramique (par exemple une plaque du type de celle commercialisée sous la référence KeraBlack+ par la société Eurokera), cette plaque présentant une face supérieure et une face inférieure lisses, et présentant par exemple une épaisseur de 6 mm et une surface de 1.17 m², et étant en particulier obtenue en procédant comme dans la demande de brevet WO 2012156444 en réduisant la vitesse de passage dans l'arche de céramisation de 50% pour obtenir ladite plaque de grandes dimensions sans défauts de planéité.

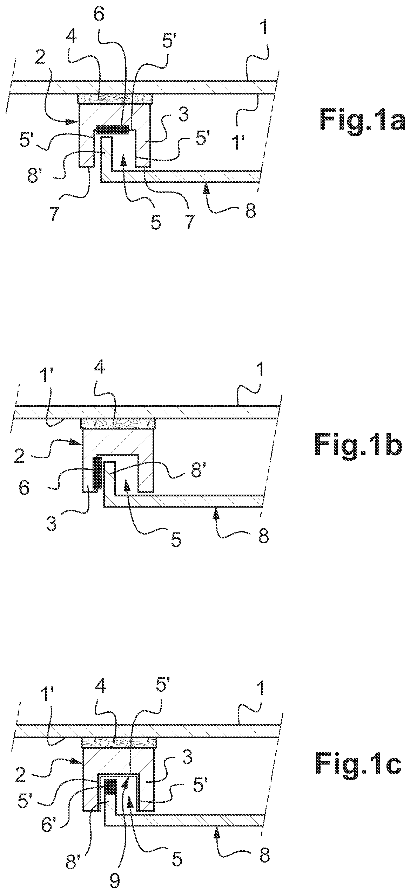

Dans l'exemple non couvert par les revendications illustré en figures 1a à 1c, la plaque vitrocéramique (1), destinée notamment à servir de surface de meuble ou grand plan de travail, est munie, sur sa face inférieure (1'), de plusieurs éléments de connexion (2) identiques ou similaires (un seul élément étant ici représenté sur les figures) comprenant chacun au moins une coque ou un corps cylindrique (3), chaque élément de connexion étant collé sous le dessous (ou face inférieure en position d'utilisation) de la plaque au moyen d'une colle thermodurcissable (4) présentant un coefficient de dilatation inférieur à 900.10⁻⁷ K⁻¹ entre -40 et 80°C et une résistance au cisaillement sur aluminium entre 10 et 50 N/mm², telle qu'une colle de type époxy commercialisée sous la référence Loctite EA 9492 par la société Henkel, ou une colle de type cyanoacrylate commercialisée sous la référence Loctite 480 par la société Henkel.

Chaque élément de connexion (2) est formé d'au moins un corps cylindrique (3), en particulier creux ou semi-creux, de 0.5 à 3 cm de diamètre, et de 0.5 à 3 cm de hauteur, par exemple en un matériau amagnétique tel que de l'aluminium, du graphite, etc, et d'au moins un aimant (6), fixé (par exemple par collage ou encastrement) dans la cavité (5) à la base du connecteur (2). L'aimant est par exemple réalisé en alliage de samarium et de cobalt ou en alliage de néodyme, de fer et de bore, et recouvre de préférence de 15 à 100% (voire de 30 à 100%) de la surface inférieure du pion (formée en déplié pour l'essentiel de la surface intérieure totale (5') de la cavité et des surfaces inférieures 7 des parois adjacentes).

L'élément support destiné à recevoir un ou des équipements ou accessoires se présente par exemple sous forme d'un caisson ou boitier (non représenté) essentiellement en aluminium ou en plastique, mais présentant également une partie latérale (8) ou aile avec une extrémité (8') apte à venir se loger dans la cavité (5) de l'élément de connexion, cette extrémité étant formée par exemple d'un matériau ferromagnétique et formant une partie complémentaire de celle aimantée (6) de l'élément afin de permettre la fixation, de façon amovible, de l'élément support (et des accessoires ou équipements qu'il contient) à l'élément de connexion, et par là même à la plaque, par la force d'attraction s'exerçant entre l'aimant/la partie aimantée et l'extrémité ferromagnétique du boitier.

Dans l'exemple en figure 1a, lors du montage de l'élément support portant les équipements ou accessoires, l'extrémité (8') de l'élément support est introduite dans la cavité (5) du connecteur (2) où elle subit l'attraction de l'aimant avec une force s'exerçant en direction de la plaque. Si un démontage ou changement d'équipements est nécessaire, l'élément support peut être retiré en exerçant une force dans le sens inverse.

Dans la variante en figure 1b, l'aimant/la partie aimantée (6) est cette fois placé(e) de façon que la force qui s'exerce entre l'aimant et l'extrémité (8') soit perpendiculaire à la direction d'introduction.

Dans la variante en figure 1c, l'aimant/la partie aimantée (6) se trouve cette fois sur l'élément support associé à l'élément de connexion, l'élément de connexion présentant dans ce cas une surface intérieure (5') de la cavité en un matériau ferromagnétique, par exemple ladite surface intérieure étant revêtue d'un feuillet ferromagnétique (9), collé le cas échéant sur ladite surface, ou d'une peinture à base de particules magnétiques.

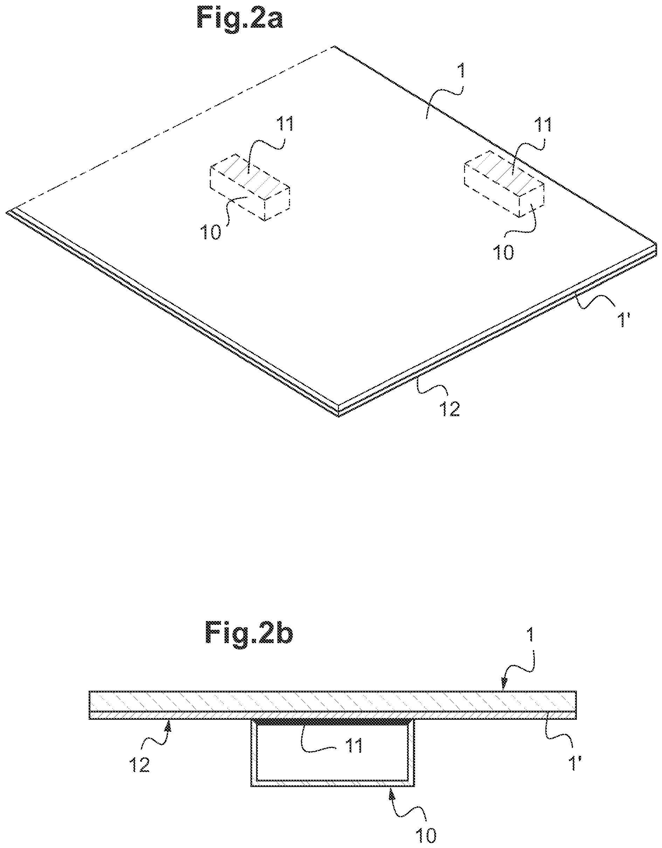

Dans le premier mode de réalisation selon l'invention illustré en figure 2 a et 2b, la plaque vitrocéramique (1), destinée notamment à servir de surface de meuble ou grand plan de travail, est munie, sur sa face inférieure (1'), d'un élément de connexion sous forme d'une couche de peinture magnétique d'épaisseur entre 1 et 200 µm, ou d'un feuillet ferromagnétique (12) d'épaisseur entre 10 et 2000 µm, couvrant toute la face inférieure de la plaque. La peinture est par exemple une peinture comprenant de 50% en poids de résine silicone commercialisée sous la référence DC 249 par la société Dow Corning, 30% de pigments magnétiques commercialisés sous la référence Alnico FLNG12 par Epixen Industries, 10% de charges commercialisées sous la référence Talc 10MO par la société Omya, et 2 % d'agents dispersants commercialisés sous la référence Disperbik 110 par la société Byk GmbH, 1% d'additifs rhéologiques commercialisés sous la référence Aerosil 300 par la société Evonik, 2% de débullants commercialisés sous la référence Byk 306 par la société Byk GmbH, et 3% de xylène.

L'élément support (10) se présente par exemple sous forme d'un caisson ou boitier rectangulaire de 19 X 26 cm et d'épaisseur (de parois latérales) de 12 mm, essentiellement en aluminium ou plastique et pourvu sur sa face supérieure d'une partie aimantée (11), cet élément support étant destiné à recevoir un ou des équipements ou accessoires (non représentés) tels que des bobines d'induction, un boitier électronique, etc. Ce boitier peut venir se fixer sous la plaque à n'importe quel endroit (comme illustré notamment en figure 2a où deux éléments supports sont placés à des endroits quelconques), la fixation s'opérant par l'attraction exercée entre la partie aimantée (11) de l'élément support et la peinture ou le feuillet magnétique sous le dessous de la plaque, offrant ainsi une grande flexibilité en terme de positionnement des éléments rapportés, ces éléments rapportés étant en outre fixés de manière amovible.

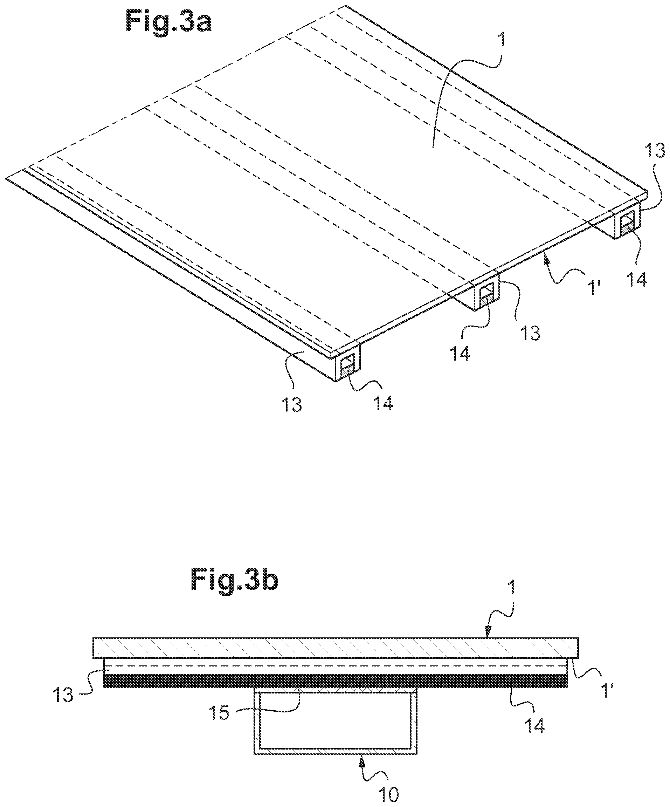

Dans le deuxième mode de réalisation selon l'invention illustré en figure 3 a et 3b, la plaque vitrocéramique (1) est cette fois munie, sur sa face inférieure (1'), de trois éléments de connexion (13) similaires ou identiques sous forme de rails en aluminium, à section par exemple en U (comme représenté), L ou T, d'épaisseur comprise entre 0.5 et 3 cm et de longueur par exemple entre 1 et 30 cm, voire de longueur correspondant à celle de la plaque, chaque élément de connexion ou rail renfermant un barreau aimanté (14) sur tout ou partie de sa longueur.

L'élément support (10) se présente par exemple sous forme d'un caisson ou boitier rectangulaire de 480X550 mm, pourvu au moins sur sa face supérieure (15) d'une partie formée par exemple d'un matériau ferromagnétique et permettant ainsi la fixation, de façon amovible, de l'élément support (et des accessoires ou équipements - non représentés - qu'il contient) à l'élément de connexion, et par là même à la plaque, par la force d'attraction s'exerçant entre l'aimant/la partie aimantée et la partie ferromagnétique du boitier. Le boitier peut venir se fixer sous la plaque à différents endroits le long des rails, la fixation s'opérant par l'attraction exercée entre la partie aimantée (14) de chaque élément de connexion concerné et la partie ferromagnétique de l'élément support concerné. Selon une variante de ce mode de réalisation, chaque rail, par exemple en matériau amagnétique tel que l'aluminium ou le graphite, peut être muni d'un revêtement, par exemple à sa base, ou dans sa cavité intérieure, sous forme d'une peinture ou d'un feuillet magnétique, l'élément support présentant alors une partie aimantée comme celui de la figure 2b.

La plaque selon l'invention peut notamment être utilisée avec avantages pour réaliser une nouvelle gamme de meubles ou dispositifs de cuisson.

## Revendications

1. Plaque vitrocéramique (1), destinée en particulier à être utilisée comme surface de meuble et/ou plan de travail, et comprenant, en au moins l'une de ses faces, en particulier sa face inférieure (1'), au moins un élément de connexion (13) de hauteur inférieure ou égale à 10 cm, ledit élément de connexion comprenant au moins une partie aimantée ou susceptible d'être attirée par un aimant, **caractérisée en ce que** ledit élément de connexion est un profilé amagnétique présentant une cavité dans laquelle un barreau aimanté (14) ou un revêtement magnétique sous la forme d'une peinture ou d'un feuillet est agencée .

2. Plaque vitrocéramique (1), destinée en particulier à être utilisée comme surface de meuble et/ou plan de travail, et comprenant, en au moins l'une de ses faces, en particulier sa face inférieure (1'), au moins un élément de connexion de hauteur inférieure ou égale à 10 cm, ledit élément de connexion comprenant au moins une partie aimantée ou susceptible d'être attirée par un aimant, **caractérisée en ce que** ledit élément de connexion est sous forme d'un revêtement ou couche aimantée (12) couvrant toute la face inférieure de la plaque, ladite couche étant une couche de peinture magnétique, ledit revêtement étant un feuillet magnétique, ledit élément de connexion ou au moins une partie desdits éléments de connexion étant aptes à recevoir, de façon amovible, au moins une partie complémentaire (11), aimantée ou susceptible d'être attirée par un aimant, d'un élément à rapporter, tel qu'un élément support (10) devant recevoir un ou des accessoires à associer ou un accessoire à associer.

3. Plaque vitrocéramique selon la revendication 1, **caractérisée en ce que** la plaque comprend plusieurs éléments de connexion positionnés sous la face inférieure de la plaque.

4. Plaque vitrocéramique selon la revendication 1, **caractérisé en ce que** ledit élément de connexion ou ladite partie, aimantée ou susceptible d'être attirée par un aimant, de l'élément de connexion, est sous forme d'un revêtement ou couche, par exemple sous forme d'une couche de peinture formée de particules magnétiques, ou sous forme d'un feuillet ferromagnétique.

5. Plaque vitrocéramique selon l'une des revendications précédentes, **caractérisée en ce que** ladite partie aimantée ou susceptible d'être attirée par un aimant de l'élément de connexion, occupe une surface représentant de 15 à 100% de la surface de l'élément de connexion sur son côté opposé à celui au contact de la plaque vitrocéramique.

6. Plaque vitrocéramique selon la revendication 1, **caractérisée en ce que** ledit élément de connexion ou au moins une partie desdits éléments de connexion sont aptes à recevoir, de façon amovible, au moins une partie complémentaire, aimantée ou susceptible d'être attirée par un aimant, d'un élément à rapporter, tel qu'un élément support devant recevoir un ou des accessoires à associer ou un accessoire à associer.

7. Plaque vitrocéramique selon les revendications 1 ou 2, **caractérisée en ce que** l'aimant ou la partie aimantée de l'élément de connexion ou de l'élément à rapporter présente un produit énergétique maximal BHmax d'au moins 10 KJ/m³.

8. Plaque vitrocéramique selon l'une des revendications 6 ou 7, **caractérisée en ce que** le ou le ou les éléments supports, équipant ou destinés à équiper la plaque, sont de type caisson ou plateau, et le ou les accessoires équipant ou destinés à équiper la plaque sont notamment de type élément de chauffage, système d'affichage, carte électronique, composant sonore ou vibrant, source lumineuse, boîtier ou interface de commande ou capteur.

9. Plaque vitrocéramique selon l'une des revendications 1 à 8, **caractérisée en ce que** ladite plaque est une plaque monolithique présentant une épaisseur inférieure à 15 mm, un coefficient de dilatation inférieur à 30.10⁻⁷ K⁻¹ entre 20 et 400°C, et une surface supérieure ou égale à 0.7 m².

10. Equipement mobilier et/ou ménager, en particulier plan de travail ou meuble, comprenant au moins une plaque vitrocéramique selon l'une des revendications 1 à 9.

11. Equipement mobilier et/ou ménager selon la revendication 10, **caractérisé en ce que** ladite plaque occupe au moins 50%, voire la totalité d'une face dudit équipement mobilier et/ou ménager, en particulier la face supérieure, et est montée, notamment horizontalement, sur un ou des éléments supports afin d'offrir une surface stable continue destinée à différents usages.

## Patentansprüche

1. Glaskeramikplatte (1), die insbesondere dazu bestimmt ist, als Oberfläche eines Möbelstücks und/oder einer Arbeitsplatte verwendet zu werden, und die auf mindestens einer ihrer Seiten, insbesondere ihrer Unterseite (1'), mindestens ein Verbindungselement (13) mit einer Höhe kleiner als oder gleich 10 cm umfasst, wobei das Verbindungselement mindestens einen Teil umfasst, der magnetisiert oder geeignet ist, durch einen Magneten angezogen zu werden, **dadurch gekennzeichnet, dass** das Verbindungselement ein amagnetisches Profil ist, das einen Hohlraum aufweist, in dem ein magnetisierter Stab (14) oder eine magnetische Beschichtung in Form einer Farbe oder eines Blättchens angeordnet ist.

2. Glaskeramikplatte (1), die insbesondere dazu bestimmt ist, als Oberfläche eines Möbelstücks und/oder einer Arbeitsplatte verwendet zu werden, und die auf mindestens einer ihrer Seiten, insbesondere ihrer Unterseite (1'), mindestens ein Verbindungselement mit einer Höhe von weniger als oder gleich 10 cm umfasst, wobei das Verbindungselement mindestens einen Teil umfasst, der magnetisiert ist oder geeignet ist, von einem Magneten angezogen zu werden, **dadurch gekennzeichnet, dass** das Verbindungselement in Form einer Beschichtung oder magnetisierten Schicht (12) vorliegt, welche die gesamte Plattenunterseite bedeckt, wobei die Schicht eine magnetische Farbschicht ist, wobei die Beschichtung ein magnetisches Blättchen ist, wobei das Verbindungselement oder mindestens ein Teil der Verbindungselemente in der Lage ist, mindestens einen ergänzenden Teil (11), der magnetisiert ist oder geeignet ist, durch einen Magneten angezogen zu werden, eines anzusetzenden Element, wie eines Stützelements (10), das (ein) zuzuordnende(s) Zubehörteil(e) oder ein zuzuordnendes Zubehörteil aufnehmen soll, lösbar aufzunehmen.

3. Glaskeramikplatte nach Anspruch 1, **dadurch gekennzeichnet, dass** die Platte mehrere Verbindungselemente umfasst, die unter der Plattenunterseite positioniert sind.

4. Glaskeramikplatte nach Anspruch 1, **dadurch gekennzeichnet, dass** das Verbindungselement oder der Teil des Verbindungselements, der magnetisiert oder geeignet ist, durch einen Magneten angezogen zu werden, in Form einer Beschichtung oder Schicht vorliegt, zum Beispiel in Form einer aus magnetischen Partikeln gebildeten Farbschicht, oder in Form eines ferromagnetischen Blättchens.

5. Glaskeramikplatte nach einem der vorhergehenden Ansprüche, **dadurch gekennzeichnet, dass** der Teil des Verbindungselements, der magnetisiert oder geeignet ist, durch einen Magneten angezogen zu werden, eine Fläche einnimmt, die 15 bis 100 % der Oberfläche des Verbindungselements auf seiner Seite, die der mit der Glaskeramikplatte in Kontakt befindlichen gegenüberliegt, ausmacht.

6. Glaskeramikplatte nach Anspruch 1, **dadurch gekennzeichnet, dass** das Verbindungselement oder mindestens ein Teil der Verbindungselemente in der Lage ist, mindestens einen ergänzenden Teil, der magnetisiert oder geeignet ist, durch einen Magneten angezogen zu werden, eines anzusetzenden Elements, wie eines Stützelements, das (ein) zuzuordnende(s) Zubehörteil(e) oder ein zuzuordnendes Zubehörteil aufnehmen soll, lösbar aufzunehmen.

7. Glaskeramikplatte nach Anspruch 1 oder 2, **dadurch gekennzeichnet, dass** der Magnet oder der magnetisierte Teil des Verbindungselements oder des anzusetzenden Elements ein maximales Energieprodukt BHmax von mindestens 10 KJ/m³ aufweist.

8. Glaskeramikplatte nach einem der Ansprüche 6 oder 7, **dadurch gekennzeichnet, dass** das oder die Stützelemente, mit denen die Platte ausgestattet ist oder ausgestattet werden soll, vom Typ Kasten oder Platte sind, und das oder die Zubehörteile, mit denen die Platte ausgestattet ist oder ausgestattet werden soll, insbesondere vom Typ Heizelement, Anzeigesystem, Platine, akustischer oder Vibrationskomponente, Lichtquelle, Steuergehäuse oder -schnittstelle oder Sensor sind.

9. Glaskeramikplatte nach einem der Ansprüche 1 bis 8, **dadurch gekennzeichnet, dass** die Platte eine monolithische Platte mit einer Dicke von weniger als 15 mm, einem Ausdehnungskoeffizienten von weniger als 30.10⁻⁷ K⁻¹ zwischen 20 und 400 °C und einer Oberfläche ist, die größer oder gleich 0,7 m² ist.

10. Mobiliar- und/oder Haushaltsausstattung, insbesondere Arbeitsplatte oder Möbelstück, umfassend mindestens eine Glaskeramikplatte nach einem der Ansprüche 1 bis 9.

11. Mobiliar- und/oder Haushaltsausstattung nach Anspruch 10, **dadurch gekennzeichnet, dass** die Platte mindestens 50 % oder sogar die Gesamtheit einer Fläche der Mobiliar- und/oder Haushaltsausstattung einnimmt, insbesondere die Oberseite, und insbesondere horizontal auf einem oder mehreren Stützelementen montiert ist, um eine durchgehende stabile Oberfläche bereitzustellen, die für unterschiedliche Verwendungen bestimmt ist.

## Claims

1. A glass ceramic sheet (1) intended in particular to be used as a surface of a furniture unit and/or as a worktop, and comprising, at least in one of its faces, in particular its lower face (1'), at least one connection element of a height less than or equal to 10 cm, said connection element (13) comprising at least one part that is magnetized or capable of being attracted by a magnet, **characterized in that** said connection element a rail made of a non-magnetic material comprising a cavity wherein a magnetized bar (14) or a magnetic coating like a paint or foil is arranged.

2. A glass ceramic sheet (1) intended in particular to be used as a surface of a furniture unit and/or as a worktop, and comprising, at least in one of its faces, in particular its lower face (1'), at least one connection element of a height less than or equal to 10 cm, said connection element comprising at least one part that is magnetized or capable of being attracted by a magnet, **characterized in that** said connection element is in the form of a magnetized coating or layer (12) covering the entire lower face of the sheet, said coating being of a coat of magnetic paint, said layer being a magnetic foil, said connection element or at least part of said connection elements are able to accept, removably, at least one complementary part (11), magnetized or capable of being attracted by a magnet, of an element that is to be added, such as a support element (10) that is to accept one or more accessories to be associated, or an accessory that is to be associated.

3. The glass ceramic sheet as claimed in claim 1, **characterized in that** the sheet comprises several connection elements positioned under the lower face of the sheet.

4. The glass ceramic sheet as claimed in claim 1, **characterized in that** said connection element or said part, that is magnetized or capable of being attracted by a magnet, of the connection element is in the form of a coating or layer, for example in the form of a coat of paint formed from magnetic particles or in the form of a ferromagnetic foil.

5. The glass ceramic sheet as claimed in one of the preceding claims, **characterized in that** said part that is magnetized or capable of being attracted by a magnet of the connection element occupies an area representing from 15 to 100% of the surface-area of the connection element on its opposite side to the one in contact with the glass ceramic sheet.

6. The glass ceramic sheet as claimed in claim 1, **characterized in that** said connection element or at least part of said connection elements are able to accept, removably, at least one complementary part, magnetized or capable of being attracted by a magnet, of an element that is to be added, such as a support element that is to accept one or more accessories to be associated, or an accessory that is to be associated.

7. The glass ceramic sheet as claimed in claims 1 or 2, **characterized in that** the magnet or the magnetized part of the connection element or of the element that is to be added has a maximum energy product BHmax of at least 10 KJ/m³.

8. The glass ceramic sheet as claimed in either of claims 6 or 7, **characterized in that** the support element(s) with which the sheet is equipped or intended to be equipped are of the casing or plate type, and the accessory or accessories with which the sheet is equipped or intended to be equipped are in particular of the heating element, display system, electronic board, audible or vibrating component, light source, control unit or interface or sensor type.

9. The glass ceramic sheet as claimed in one of claims 1 to 8, **characterized in that** said sheet is a monolithic sheet having a thickness of less than 15 mm, an expansion coefficient of less than 30×10⁻⁷ K⁻¹ between 20°C and 400°C, and a surface area of greater than or equal to 0.7 m².

10. An item of furniture and/or household equipment, particularly a worktop or furniture unit, comprising at least one glass ceramic sheet as claimed in one of claims 1 to 9.

11. The item of furniture and/or household equipment as claimed in claim 10, **characterized in that** said sheet occupies at least 50% or even all of one face of said item of furniture and/or household equipment, particularly the top face, and is mounted, particularly horizontally, on one or more support elements so as to offer a continuous stable surface intended for various uses.
